# EUROPÄISCHE PATENTSCHRIFT

(11) **EP 2 942 436 B1**
(45) Veröffentlichungstag und Bekanntmachung des Hinweises auf die Patenterteilung: **20.12.2017**
(21) Anmeldenummer: 15001247.4
(22) Anmeldetag: 28.04.2015
(51) Int. Cl.: E02B 8/02, E03F 5/14

(54) **RECHEN MIT RÄUMER**
GRATE WITH CLEANSER
DEGRILLEUR COMPRENANT UN RACLAGE

(30) Priorität: 08.05.2014 DE 102014006626
(43) Veröffentlichungstag der Anmeldung: 11.11.2015
(73) Patentinhaber: Werkstoff + Funktion Grimmel Wassertechnik GmbH, 61239 Ober-Mörlen (DE)
(72) Erfinder: Grimmel, Olaf, D-61239 Ober-Mörlen (DE)
(74) Vertreter: Hebing, Norbert

(56) Entgegenhaltungen:
- DE-A1- 2 309 479
- FR-A- 639 303
- FR-A1- 2 693 217
- GB-A- 1 218 934

## Beschreibung

Die Erfindung bezieht sich auf eine Rechenanlage mit einem schräg in einer Rinne anzuordnenden Rechen und einem Räumer, welcher zum Fördern des Rechengutes zu einer Abwurfkante einen oberhalb des Rechens um eine Achse pendelnd aufgehangenen und mittels einer ersten Stelleinrichtung in eine entlang des Rechens vor- und zurückgehende Bewegung versetzbaren Räumarm hat, der an seinem dem Rechen zugewandten distalen Ende ein Räumelement hat, wobei Mittel vorgesehen sind, die bewirken, dass das Räumelement in der Vorbewegung auf dem Rechen und in der Rückbewegung in Abstand zum Rechen läuft, wobei der Räumarm am distalen Ende eines an seinem proximalen Ende schwenkbar gelagerten Steuerarms aufgehangen ist, wobei zum Schwenken des Steuerarms eine zweite Stelleinrichtung zumindest zeitweise am Steuerarm angreift, und wobei die Stelleinrichtungen derart miteinander gekoppelt sind, dass die Bewegungen von Steuerarm und Räumarm synchronisiert sind.

Derartige Rechenanlagen haben z. B. die Aufgabe, Wasser, das einer Kläranlage zufließt, zuvor von Grob- und Feinstoffen zu befreien. Ebenso sind Anwendungen in industriellen Produktbereichen zur Entnahme von festen Stoffen aus flüssigen Medien bekannt. Grob- und Feinstoffe - das Rechengut - sammeln sich vor dem in der Rinne angeordneten Rechen, der dazu von Zeit zu Zeit gereinigt werden muss. Dazu wird ein Räumelement (oder mehrere Räumelemente sukzessive) von unten nach oben über den Rechen bis zu einer Abwurfkante geschoben, wo die sich vor dem Räumelement gesammelten Stoffe zum Abtransport in einen Behälter oder ein weiter führendes Transportaggregat fallen.

Eine Rechenanlage gemäß dem Oberbegriff des Anspruches 1 ist z. B. in der FR 2 693 217 A1 beschrieben. Demnach ist der Räumarm an einem kurzen Steuerarm schwenkbar gelagert, wobei der Steuerarm in der Vorbewegung des Räumarmes derart gegen den Rechen gezogen wird, dass das Räumelement an den Rechen angelegt wird bzw. seine Zinken in den Rechen eintauchen. In der Rückbewegung wird der Steuerarm angehoben, so dass der Rechenarm im Abstand zum Rechen zurückbewegt wird.

Eine weitere Rechenanlage ist z. B. in der DE 195 09 738 A1 beschrieben. Ein breites Räumelement befindet sich am distalen Ende eines Räumarmes, der von einem Hydraulikelement in eine vor- und zurückgehende Bewegung versetzt wird.

In der Vorbelegung liegt das Räumelement auf dem Rechen auf, so dass es das Rechengut bis zur Abwurfkante vor sich herschiebt.

In der Rückbewegung wird der Arm auf eine Führungsbahn gelenkt, die das Räumelement vom Rechen entfernt. Dazu befindet sich am oberen Ende der Führungsbahn ein klappbares Schwenkteil, das in der Vorbewegung des Räumarmes von einem am Räumarm abstehenden Zapfen unterfahren und dabei angehoben wird und das in der Rückbewegung des Räumarmes als Rampe dient, über die der Zapfen auf die Führungsbahn gelenkt wird, wodurch der Räumarm vom Rechen entfernt wird.

Aus diesem Grunde ist das Schwenklager am proximalen Ende des Räumarmes in einer Kulisse geführt, die im wesentlichen senkrecht zum Rechen verläuft.

Diese Anordnung hat sich im Großen und Ganzen bewährt. Allerdings ist der Aufbau relativ aufwändig, da sowohl eine Kulisse für das Schwenklager installiert werden muss, als auch eine Führungsbahn mit einem Schwenkteil.

Die DE 23 09 479 A1 offenbart eine Rechenanlage, bei der der Rechenarm über ein Gelenkviereck über eine definierte Bahn bewegt wird, wobei das Gelenkviereck so eingerichtet ist, dass das Räumelement dem Verlauf des Rechens folgt.

Die Erfindung beruht daher auf der Aufgabe, eine kompakte und leicht zu montierende und zu wartende Anordnung zu erhalten.

Zur Lösung der Aufgabe sieht die Erfindung vor, dass die zweite Stelleinrichtung in der Vorbewegung des Räumarmes außer Eingriff mit dem Steuerarm steht. Hierzu weist die zweite Stelleinrichtung eine Kurbelachse auf, die über ein exzentrisch zur Kurbelachse gelagertes Zugelement mit dem Räumarm verbunden ist, und wobei entweder von der Kurbelachse ein Ausleger absteht, der mit seinem distalen Ende an den Steuerarm anlegbar ist oder auf der Kurbelachse eine Kurvenscheibe angebracht ist, deren Rand eine Steuerkurve bildet, und der Steuerarm ein Kontaktelement aufweist, das an die Steuerkurve anlegbar ist.

Anstelle der Kulissenführung gemäß der schon oben erwähnten DE 195 09 738 A1 für das Schwenklager des Räumarmes ist somit ein Steuerarm vorgesehen, der eine begrenzt schwenkbare Bewegung durchführt und damit die an seinem distalen Ende ausgebildete Schwenkachse für den Räumarm im Wesentlichen vertikal im Bezug auf die Rechenebene bewegt.

Um den Räumarm in der Zurückbewegung vom Rechen zu entfernen, ist die zweite Stelleinrichtung vorgesehen, die unmittelbar an den Steuerarm angreift und diesen so verschwenkt, dass das distale Ende des Steuerarms sich vom Rechen entfernt.

Die beiden Stelleinrichtungen sind dazu derart miteinander gekoppelt, dass die Bewegungen von Steuerarm und Räumarm synchronisiert sind, wobei wesentlich ist, dass zwischen der zweiten Stelleinrichtung und dem Steuerarm keine feste Kopplung besteht, sondern sich die Stelleinrichtung vom Steuerarm lösen kann und damit außer Eingriff steht, wenn in der Vorbewegung des Räumarmes dieser über den Rechen bewegt wird. Dadurch liegt das Räumelement frei auf dem Rechen auf und ist vom Gewicht des Steuerarmes und Räumarmes belastet, wodurch vermieden wird, dass Rechengut unter dem Räumelement durchrutscht.

Da in der Vorbewegung die vertikale Lage des Räumelements durch die zweite Stelleinrichtung nicht beeinflusst wird, wird auch ein evtl. Abrieb des Räumelementes automatisch ausgeglichen. Eine Ausbesserung des Räumelementes oder seine Nachjustierung ist daher nicht notwendig. Weiterhin kann auf eine Führungsbahn sowie eine Kulisse - wie im Stand der Technik vorgesehen - verzichtet werden, was den Wartungsaufwand verringert.

Vorzugsweise werden beide Stelleinrichtungen motorisch angetrieben, wobei insbesondere wegen der geforderten Synchronität auch ein gemeinsamer Motor vorgesehen werden kann.

Dadurch, dass beide Stelleinrichtungen von einer gemeinsamen Kurbelachse angetrieben werden, ergibt sich automatisch die gewünschte Synchronisation.

Da sich das distale Ende des Auslegers lediglich an den Steuerarm anlegt, um diesen anzuheben, löst es sich auch wieder von diesem, sobald der Ausleger sich in einen winkelbereich der Kurbelachse hineinbewegt, der auf der Seite der Kurbelachse liegt, der dem Steuerarm gegenüber liegt.

Um zu einem kompakten Aufbau zu gelangen, ist vorgesehen, dass die Schwenkachse des Steuerarms sich in etwa oberhalb des oberen Endes des Rechens befindet und sich in horizontaler Richtung über den Rechen erstreckt, und dass die Kurbelachse sich unterhalb des Steuerarms und in Vorwärtsbewegungsrichtung gesehen hinter dem Räumarm befindet.

Dies ermöglicht es, die Schwenkachse für den Steuerarm innerhalb eines im Bezug zur Ausdehnung des Rechens kurzen Gehäuses unterzubringen, das ggf. lediglich über einen Ausleger gegen ein Kippen geschützt werden braucht.

Vorzugsweise befindet sich die Schwenkachse in einem Gehäuse, das aus zwei sich parallel zu den Armen erstreckenden Wangen besteht und das über höhenverstellbare Auflager über dem oberen Ende des Rechens aufgestellt ist.

Die höhenverstellbaren Auflager erlauben eine Herstellung des Gehäuses und der Schwenkachse in einer Standardgröße, wobei eine Anpassung an die örtliche Gegebenheit, insbesondere an die Tiefe der Rinne, über eine Höhenverstellung des Gehäuses erfolgt.

Im Gehäuse kann weiterhin ein Schieber untergebracht werden, mit dem das sich am Räumelement sammelnde Rechengut vom Räumelement in Richtung auf die Abwurfkante verschoben werden kann. Der Schieber ist an einem kurzen Schwenkarm, der ggf. aus zwei parallel verlaufenden Streben besteht, gehalten, dessen Lager sich in etwa oberhalb des oberen Endes des Rechens befindet. Kurz vor der Abwurfkante läuft das Räumelement gegen den Schieber, wodurch dieser mitgenommen wird und sich dabei bei einer weiteren Bewegung des Räumelementes zur Abwurfkante in Richtung auf das distale Ende des Räumelementes bewegt.

Die Kurbelachse wird vorzugsweise von einem Elektromotor über ein Getriebe angeordnet. Eine Motorgetriebeeinheit ist dazu seitlich am Gehäuse angebracht, wo es zu Wartungszwecken leicht erreichbar ist.

Bei der beschriebenen Ausgestaltung der Anordnung zum Räumen des Rechens kann das obere Ende des Rechens ohne Unterbrechung an eine einen geschlossenen Boden aufweisende halbzylindrische Aufnahmerinne anschließen, in der sich eine Transportschnecke befindet. Der unterbrechungsfreie Übergang bildet dabei einerseits eine Abwurfkante für das Rechengut und andererseits eine Überlaufkante für das sich in der Aufnahmerinne durch die Transportschnecke erzeugte Presswasser.

Presswasser entsteht, wenn die Transportschnecke das Rechengut an das eine Ende der Aufnahmerinne fördert und dabei zusammenpresst. Nach dem Stand der Technik besaß die Aufnahmerinne in ihrer Sohle Öffnungen, aus denen das Wasser in einer Abflussrinne austrat. Dank der nunmehr vorgeschlagenen Ausgestaltung der Aufnahmerinne *mit einem geschlossenen Boden* kann auf die Abflussrinne verzichtet werden, da das Presswasser über die Überlaufkante in die den Rechen aufnehmende Rinne zurückfließen kann.

Im Folgenden soll anhand eines Ausführungsbeispieles die Erfindung näher erläutert werden. Dazu zeigen:
- Die Fig.1a-1d: eine Seitensicht der Rechenanlage in verschiedenen Phasen des Bewegungsablaufes ihres Räumers,
- Fig.2: eine Ansicht der Rechenanlage quer zur Bewegungsebene der Arme des Räumers, und
- Fig. 3: eine Seitenansicht der Rechenanlage nach Fig. 1 mit einer Kurvenscheibe anstelle eines Auslegers.

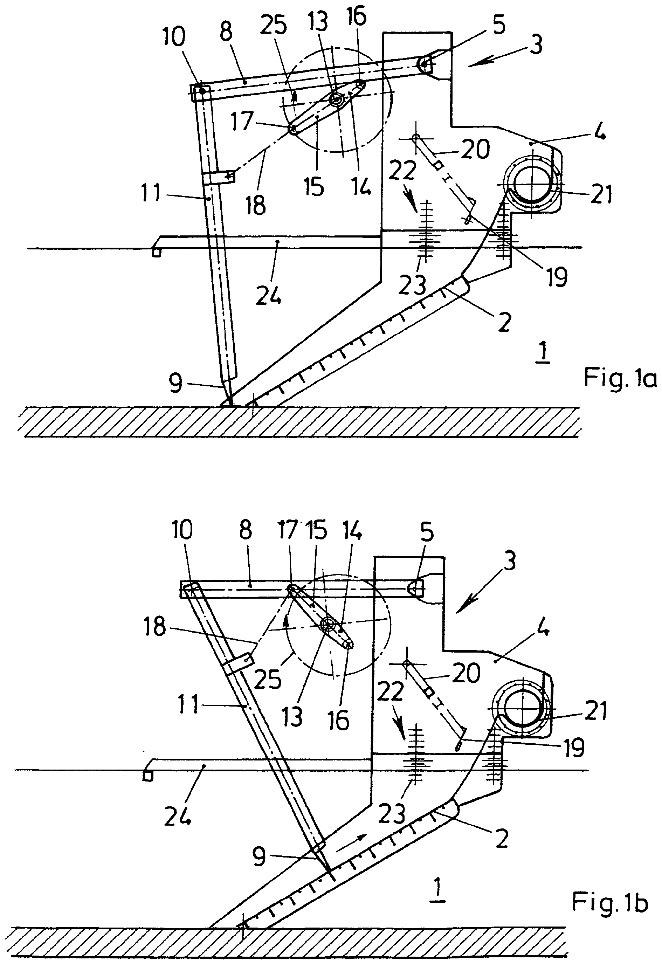

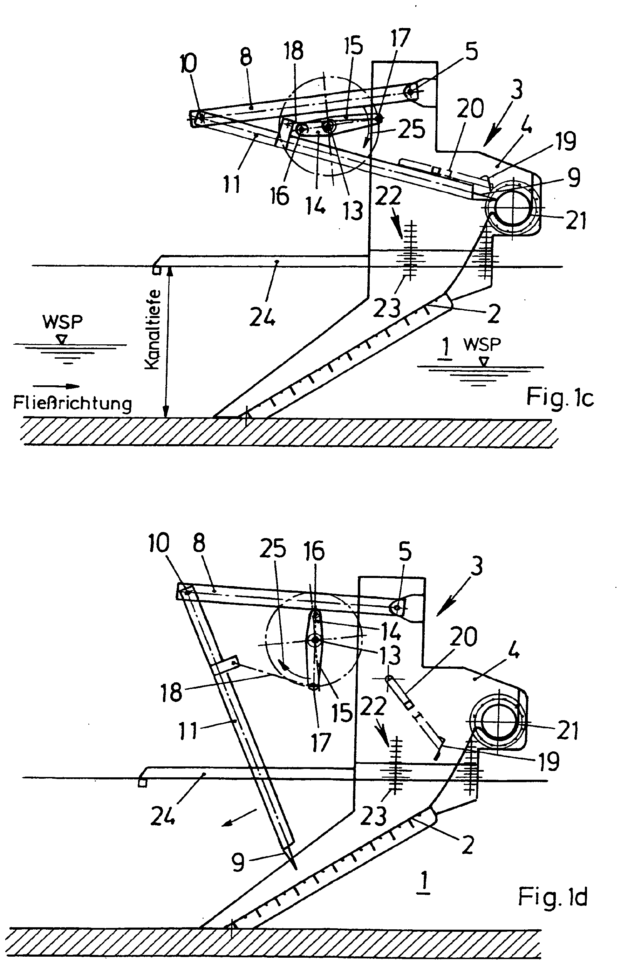

Zunächst wird auf die Fig. 1 Bezug genommen.

In einer Wasser führenden Rinne 1 befindet sich ein Rechen 2 (auch Rechenrost genannt), der in Fließrichtung des Wassers von unten schräg nach oben verläuft und der sich über die volle Breite der Rinne 1 erstreckt. Der Winkel, der von dem Rechen 2 und der Sohle der Rinne 1 eingeschlossen wird, liegt zwischen 10° und 45°.

Oberhalb des oberen Endes des Rechens 2 befindet sich ein Gehäuse 3, das aus zwei Wangen 4 besteht, die zu beiden Seiten der Rinne 1 aufgestellt sind und über hier nicht näher gezeigte Querverbindungen miteinander verbunden sind. Zur Vereinfachung der Darstellung ist die vordere Wange nicht dargestellt.

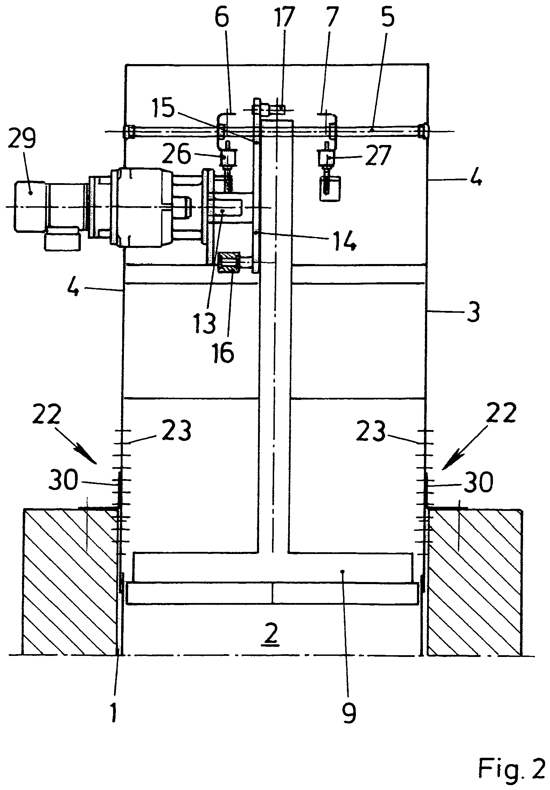

Im oberen Teil des Gehäuses 3 befindet sich eine Schwenkachse 5, an der das proximale Ende eines aus zwei Schienen 6, 7 (siehe Fig. 2) bestehenden Steuerarmes 8 schwenkbar gelagert ist, dieser erstreckt sich im Wesentlichen horizontal und in Richtung auf das vordere Ende des Rechens 2. Dort, an seinem distalen Ende, ist eine weitere Schwenkachse 10 für einen aus einer Schiene oder einem Rohr bestehenden Räumarm 11 angeordnet, der sich in Richtung auf den Rechen 2 erstreckt und an seinem unteren distalen Ende ein Räumelement 9 in der Breite des Rechens 2 trägt.

Der Rechen 2 kann aus einer Vielzahl von parallel verlaufenden Flacheisen bestehen, die alle einen rechteckigen Querschnitt besitzen, oder von einem so genannten Spaltrost gebildet werden, bei dem die Rechenstäbe einen *quasi* dreieckigen Querschnitt aufweisen und so angeordnet sind, dass jeweils eine Seite des Dreiecks dem Zulauf zugewandt ist. Dies hat zur Folge, dass sich die Spalten zwischen den Stäben in Richtung des Ablaufes aufweiten. Die Spaltaufweitung verhindert, dass sich feste Bestandteile des Rechengutes im Spalt festsetzen können.

Im ersten Fall sollte das Räumelement 9 aus einem Kamm bestehen, dessen Zinken in die Zwischenräume zwischen den Flacheisen eingreifen. Im zweiten Fall reicht ein Räumelement 9 mit einer flachen Räumkante aus, die über die dem Zulauf zugewandten Seiten der Dreiecksstäbe streicht.

Unterhalb des Steuerarmes 8 und in Fließrichtung des Wassers gesehen hinter dem Räumarm 11 befindet sich eine Kurbelachse 13, an deren von ihrem Antrieb abgewandten Ende in entgegen gesetzter Richtung zwei Ausleger 14, 15 abstehen, so dass eine Doppelkurbel gebildet ist. An dem kürzeren Ausleger 14 befindet sich am distalen Ende seitlich abstehend eine Ausheberolle 16, die in der Drehbewegung der Kurbelachse 13 gegen die Schienen 6 des Steuerarmes 8 anlegbar ist, die sich auf der Antriebsseite der Doppelkurbel befindet. Am Ende des längeren Auslegers 15 befindet sich seitlich abstehend ein Bolzen 17 zur Anlenkung eines Zugelementes in Form einer Zugstange 18, die mit dem Räumarm 11 verbunden ist, und die hier aus Übersichtsgründen nur mit Hilfe einer strichpunktierten Linie dargestellt ist.

Wenn die Geometrie der Anordnung so eingerichtet ist, dass auch in der unteren Position des Räumarmes 11, in der sich das Räumelement 9 am Fußpunkt des Rechens 2 befindet, dieser noch nicht ganz vertikal ausgerichtet ist, kann an Stelle der Zugstange 18 auch eine Zugkette vorgesehen werden, da diese während der ganzen Hin- und Herbewegung auf Zug belastet bleibt.

Im Gehäuse 3 ist weiterhin ein Schieber 19 an einem schwenkbar gehaltenen Schieberarm 20 angeordnet, der aus zwei parallel verlaufenden Streben besteht. Die Schwenkachse des Schieberarmes 20 befindet sich etwas unterhalb der Schwenkachse 5 für den Steuerarm 8. Im Gehäuse 3 befindet sich auch noch eine sich quer erstreckende Aufnahmerinne 21, in der eine Schnecke oder eine andere Fördereinrichtung verläuft, mit der das über die Abwurfkante abgeworfene Rechengut zu einer Rechengutpresse gefördert wird.

Das Gehäuse 3 besitzt höhenverstellbare Auflager 22, was durch eine Vielzahl von übereinander angeordneten Aufnahmebohrungen 23 angedeutet ist.

Außerdem befindet sich am Gehäuse 3 ein sich in horizontaler Richtung auf das vordere Ende des Rechens 2 hin erstreckender Ausleger 24.

Wie man den Teilfiguren 1 a-d entnehmen kann, wird die Kurbelachse 13 im Uhrzeigersinn bewegt (siehe Pfeil 25 am längeren Ausleger).

Gemäß der Darstellung der Fig. 1a liegt die Ausheberolle 16 gerade noch am Steuerarm 8 an, wird sich aber bei einer weiteren Drehung der Kurbelachse 13 in der durch den Pfeil 25 angedeuteten Richtung von dieser entfernen, so dass der Steuerarm 8 außer Eingriff mit der Ausheberolle 16 kommt. Der längere Ausleger 15 mit dem Bolzen 17 für die Zugstange 18 befindet sich am nächsten zum distalen Ende des Steuerarmes 8, so dass bei der folgenden Drehbewegung der Kurbelachse 13 das Räumelement 9 vom Fuß des Rechens 2 in Richtung auf dessen obere Kante bewegt wird, wobei das Räumelement 9 den Rechen 1 kontaktiert und auf diesem - bedingt durch das Eigengewicht des Räum- und des Steuerarmes - aufliegt und dabei das sich dort angesammelte Rechengut zur Abwurfkante mitnimmt. Diese Räumbewegung ist in der Fig. 1b dargestellt. Der längere Ausleger 15 bewegt sich dabei zwischen den beiden Schienen 6, 7 des Steuerarms 8 hindurch.

Gemäß der Fig. 1c weist der längere Ausleger 15 von der Schwenkachse 10 des Räumarmes 11 weg, so dass das Räumelement 9 sich an der Abwurfkante befindet und das gesammelte Rechengut in die Aufnahmerinne 21 abwirft. Unterstützt wird er dabei von dem Schieber 19, der in der Endphase der Räumbewegung vom Räumarm 11 mitgenommen wird und sich dabei in Richtung auf dessen distales Ende bis zur unteren Kante des Räumelementes 9 bewegt, um das vom Räumelement 9 aufgenommene Rechengut in die Aufnahmerinne 21 zu schieben. Anstelle des Schiebers 19 oder zusätzlich dazu kann eine Sprüheinrichtung vorgesehen werden, deren Wasserdüsen auf die Abwurfkante gerichtet sind und die jeweils in Betrieb genommen wird, wenn das Räumelement die Abwurfkante erreicht hat.

Die Fig. 1d zeigt die Rückbewegung des Räumarmes 11, dabei legt sich die Ausheberolle 16 an den Steuerarm 8 an und hebt diesen an, so dass die Schwenkachse 10 des Räumarmes 11 so weit vom Rechen 2 entfernt wird, dass das Räumelement 9 den Rechen 2 nicht berührt. Erst wenn, wie in der Fig. 1a schon erläutert, die Ausheberolle 16 sich wieder vom Steuerarm 8 entfernt, setzt sich das Räumelement 9 erneut auf den Rechen 2 auf.

Die beschriebene Bewegung kann kontinuierlich durchgeführt oder bei Bedarf ausgelöst werden. Sie bewirkt, dass sich der Rechen 2 nicht mit Stoffen aus dem ihn durchströmenden Wasser zusetzen kann und stets ein ausreichender Rechendurchfluss gegeben ist.

Die Doppelkurbel kann sich auch andersherum drehen, wobei im Prinzip die gleichen Bewegungsabläufe des Räumarmes 11 stattfinden, wie vorgehend beschrieben. Entscheidend ist in beiden Fällen, dass beim Räumen des Rechens 2 der Steuerarm 8 von der Doppelkurbel nicht angehoben wird, so dass das Räumelement 9 auf dem Rechen 2 aufliegend von unten nach oben bewegt wird und dabei ggf. an Hindernissen nach oben ausweichen kann. In der Rückstellbewegung ist der Steuerarm 8 angehoben, so dass das Räumelement 9 im Abstand zum Rechen 2 zum Ausgangspunkt am Fuß des Rechens 2 zurückbewegt wird.

Weiterhin müssen sich die Ausheberolle 16 und der Bolzen 17 für die Zugstange 18 an der Kurbel nicht unbedingt exakt gegenüberliegen. Zur Anpassung an die vorgegebene Einbaussituation kann es notwendig werden, dass der Winkel, den die jeweilige Verbindungslinie der Ausheberolle 16 und des Bolzens 17 zur Drehachse der Kurbel einschließen, auch kleiner als 180° oder sogar kleiner als 90° sein kann.

Die Fig. 2 zeigt eine Ansicht der Rechenanordnung gemäß dem Schnitt in der Fig. 1d.

Der Steuerarm 8 besteht- wie schon erläutert - aus zwei Schienen 6, 7, die auf zwei Dämpfern 26, 27 aufliegen, um die tiefste Position des Steuerarms 8 zu definieren.

Unterhalb des Steuerarms 8 befindet sich die Kurbelachse 13, an deren Ende zwei Ausleger 14, 15 abstehen. Der eine längere Ausleger 15 besitzt den schon erwähnten Bolzen 17 für die Zugstange 18, der von der Kurbelachse 13 abgewandten Seite des Auslegers 15 absteht, und bewegt sich auf seinem Umlauf zwischen den beiden Schienen 6, 7 hindurch.

Der kürzere Ausleger besitzt zur Kurbelachse 13 hin seitlich abstehend die schon erwähnte Ausheberolle 16, die sich an der über die Kurbelachse 13 erstreckende Schiene 6 des Steuerarmes 8 anzulegen vermag. Die Schwenkachse 5 für den Steuerarm 8 befindet sich zwischen den zwei Wangen 4 des Gehäuses 3. in der Wange, auf die die Kurbelachse 13 gerichtet ist oder außerhalb des Gehäuses 3. Vor dieser Wange befindet sich eine Motorgetriebeeinheit 29 zum Antrieb der Kurbelachse 13.

Das Gehäuse 3 wird auf die Seitenwände, die die Rinne 1 begrenzen, aufgesetzt, wobei Stützwinkel 30 in vorbereiteten Aufnahmebohrungen 23 verschraubt werden, so dass die Eindringtiefe des Räumarmes 11 in die Rinne 1 an die vorgegebene Höhe der Rinne 1 angepasst werden kann.

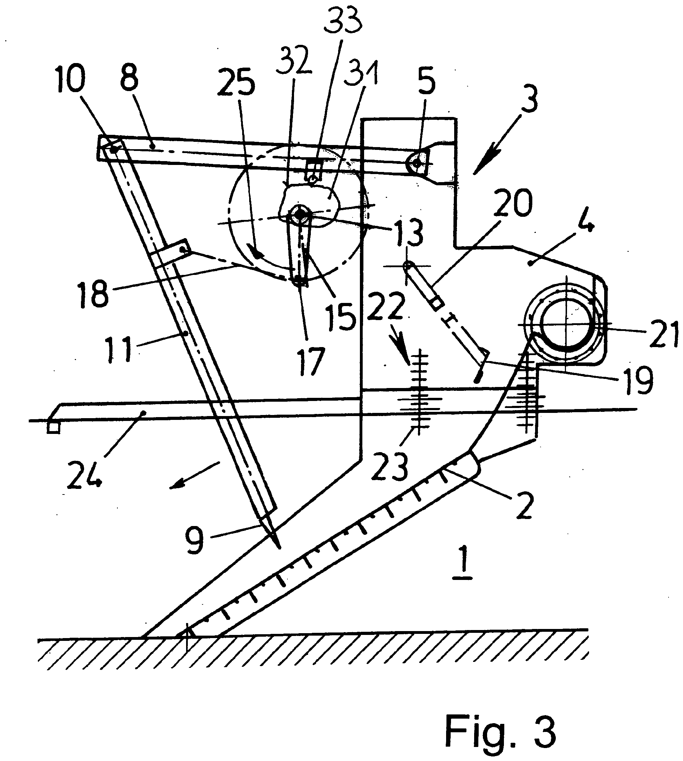

Die Fig. 3 zeigt eine alternative Ausführung einer Rechenanlage. Bis auf die Einrichtung zum Anheben des Steuerarms 8 ist diese Ausführung mit der Ausführung nach Fig. 1 identisch. Insofern kann auf die obige Beschreibung verwiesen werden. Anstelle des Auslegers ist aber eine Kurvenscheibe 31 mit der Kurbelachse 13 verschweißt, deren Rand eine Steuerkurve 32 bildet. Der Steuerarm 8 besitzt ein Kontaktelement 33 in Form einer Ausheberolle, die zum Anheben des Steuerarms 8 zumindest abschnittsweise an der Steuerkurve 32 abrollt. Die Steuerkurve ist dazu so gestaltet und orientiert, dass der Steuerarm 8 angehoben ist, wenn sich der Räumarm 11 in seiner Rückwärtsbewegung entsprechend Fig. 1d befindet.

**Bezugszeichenliste**

| | | | |
|---|---|---|---|
| 1 | Rinne | 21 | Aufnahmerinne |
| 2 | Rechen | 22 | Auflager |
| 3 | Gehäuse | 23 | Aufnahmebohrungen |
| 4 | Wangen | 24 | Ausleger |
| 5 | Schwenkachse | 25 | Pfeil |
| | | | |
| 6 | Schiene | 26 | Dämpfer |
| 7 | Schiene | 27 | Dämpfer |
| 8 | Steuerarm | | |
| 9 | Räumelement | 29 | Motorgetriebeeinheit |
| 10 | Schwenkachse | 30 | Stützwinkel |
| | | | |
| 11 | Räumarm | 31 | Kurvenscheibe |
| | | 32 | Steuerkurve |
| 13 | Kurbelachse | 33 | Kontaktelement |
| 14 | Ausleger | | |
| 15 | Ausleger | | |
| | | | |
| 16 | Ausheberolle | | |
| 17 | Bolzen | | |
| 18 | Zugstange | | |
| 19 | Schieber | | |
| 20 | Schieberarm | | |

## Patentansprüche

1. Rechenanlage mit einem schräg in einer Rinne (1) anzuordnenden Rechen (2) und einem Räumer, welcher zum Fördern des Rechengutes zu einer Abwurfkante einen oberhalb des Rechens (2) um eine Schwenkachse (10) pendelnd aufgehangenen und mittels einer ersten Stelleinrichtung in eine entlang des Rechens (2) vor- und zurückgehende Bewegung versetzbaren Räumarm (11) hat, der an seinem dem Rechen (2) zugewandten distalen Ende ein Räumelement (9) hat, wobei Mittel vorgesehen sind, die bewirken, dass das Raumelement (9) in der Vorbewegung auf dem Rechen (2) und in der Rückbewegung in Abstand zum Rechen (2) läuft, wobei der Räumarm (11) am distalen Ende eines an seinem proximalen Ende schwenkbar gelagerten Steuerarms (8) aufgefangen ist, wobei zum Schwenken des Steuerarms (8) eine zweite Stelleinrichtung zumindest zeitweise am Steuerarm (8) angreift, und wobei die Stelleinrichtungen derart miteinander gekoppelt sind, dass die Bewegungen von Steuerarm (8) und Räumarm (11) synchronisiert sind, **dadurch gekennzeichnet, dass** die zweite Stelleinrichtung in der Vorbewegung des Räumarmes außer Eingriff mit dem Steuerarm (8) steht, wobei die zweite Stelleinrichtung eine Kurbelachse (13) aufweist, die über ein exzentrisch zur Kurbelachse (13) gelagertes Zugelement (18) mit dem Räumarm (11) verbunden ist, und wobei entweder von der Kurbelachse (13) ein Ausleger (14) absteht, der mit seinem distalen Ende an den Steuerarm (8) anlegbar ist oder auf der Kurbelachse (23) eine Kurvenscheibe (31) angebracht ist, deren Rand eine Steuerkurve (32) bildet, und der Steuerarm (8) ein Kontaktelement (33) aufweist, das an die Steuerkurve (32) anlegbar ist.

2. Rechenanlage nach Anspruch 1, **dadurch gekennzeichnet, dass** die beiden Stelleinrichtungen über einen motorischen Antrieb (29) verfügen.

3. Rechenanlage nach Anspruch 1 oder 2, **dadurch gekennzeichnet, dass** die Schwenkachse (5) des Steuerarms sich oberhalb des oberen Endes des Rechens (2) befindet und sich in horizontaler Richtung über den Rechen (2) erstreckt, und dass die Kurbelachse (13) sich unterhalb des Steuerarms (8) und in Vorwärtsbewegungsrichtung gesehen hinter dem Räumarm (11) befindet.

4. Rechenanlage nach einem der vorhergehenden Ansprüche, **dadurch gekenntzeichnet,** dass sich die Schwenkachse (5) des Steuerarms (8) in einem Gehäuse (3) befindet, das aus zwei sich parallel zu den Armen erstreckenden Wangen (4) besteht und das über höhenverstellbare Auflager (22) über dem oberen Ende des Rechens (2) aufgestellt ist.

5. Rechenanlage nach Anspruch 4, **dadurch gekennzeichnet, dass** in dem Gehäuse (3) ein an das Räumelement (9) anlegbarer Schieber (19) schwenkbar gehalten ist.

6. Rechenanlage nach Anspruch 4 oder 5, **dadurch gekennzeichnet, dass** eine Motor-Getriebe-Einheit (29) zum Antrieb der Kurbelachse (13) seitlich am Gehäuse (3) angeordnet ist.

7. Rechenanlage nach einem der vorhergehenden Ansprüche, **dadurch gekennzeichnet, dass** an das obere Ende des Rechens (1) ohne Unterbrechung eine einen geschlossenen Boden aufweisende Aufnahmerinne (21) anschließt, in der sich eine Transportschnecke befindet, wobei der unterbrechungsfreie Übergang einerseits eine Abwurfkante für das Rechengut und andererseits eine Überlaufkante für das sich in der Aufnahmerinne (21) durch die Transportschnecke erzeugte Presswasser bildet.

## Claims

1. Screen system with a screen (2) to be arranged at an angle in a channel (1), and a scraper which, for conveying the screened material to a discharge edge, has a scraper arm (11) suspended in a swinging manner around a pivot axle (10) above the screen (2) and is displaceable in a backward and forward movement along the screen (2) by means of a first actuating device, the scraper arm having a scraper element (9) on its distal end which faces the screen (2), wherein means are provided which cause the scraper element (9) to run on the screen (2) during the forward movement and to run at a distance from the screen (2) during the backward movement, wherein the scraper arm (11) is suspended on the distal end of a control arm (8) which is pivotably mounted on its proximal end, wherein, for swivelling the control arm (8), a second actuating device at least at times engages the control arm (8), and wherein the actuating devices are coupled with one another such that the movements of the control arm (8) and the scraper arm (11) are synchronized, **characterized in that** the second actuating device does not engage with the control arm (8) during the forward movement of the scraper arm, wherein the second actuating device has a crank axle (13) which is connected with the scraper arm (11) by means of a tension element (18) mounted eccentrically with regard to the crank axle (13), and wherein either a cantilever (14) protrudes from the crank axle (13), which can be borne against the control arm (8) with its distal end, or a cam disk (31) is attached to the crank axle (13), the edge of the cam disk forming a control cam (32), and the control arm (8) has a contact element (33) which can be borne against the control cam (32).

2. Screen system according to claim 1, **characterized in that** the two actuating devices have a motorized drive (29).

3. Screen system according to claim 1 or 2, **characterized in that** the pivot axle (5) of the control arm is located above the upper end of the screen (2) and extends in horizontal direction over the screen (2), and that the crank axle (13) is located below the control arm (8) and, as seen looking in the direction of the forward movement, behind the scraper arm (11).

4. Screen system according to one of the preceding claims, **characterized in that** the pivot axle (5) of the control arm (8) is located in a housing (3) which comprises two sides (4) which extend parallel to the arms and which is positioned above the upper end of the screen (2) by means of height-adjustable supports (22).

5. Screen system according to claim 4, **characterized in that** in the housing (3), a slider (19) is pivotably held which can be borne against the scraper element (9).

6. Screen system according to claim 4 or 5, **characterized in that** a motor-transmission unit (29) for operating the crank axle (13) is arranged on the side of the housing (3).

7. Screen system according to one of the preceding claims, **characterized in that** a receiving channel (21) with a closed floor is connected, without interruption, via a discharge edge to the upper end of the screen (2), the receiving channel containing a screw conveyor, wherein the interruption-free transition on the one hand forms a discharge edge for the screened material and on the other hand an overflow edge for the press water generated in the receiving channel (21) by the screw conveyor.

## Revendications

1. Dégrilleur avec une grille de retenue (2) devant être placée en oblique dans une rigole (1) et avec un racleur, lequel pour transporter les refus de dégrillage vers une arête déverseuse dispose d'un bras de raclage (11) accroché au-dessus de la grille de retenue (2), en oscillation autour d'un axe de pivotement (10) et pouvant être amené au moyen d'un premier système de réglage dans un déplacement aller et retour le long de la grille de retenue (2), qui sur son extrémité distale dirigée vers la grille de retenue (2) dispose d'un élément racleur (9), des moyens étant prévus qui provoquant que dans le déplacement vers l'avant, l'élément racleur (9) fonctionne sur la grille de retenue (2) et dans le déplacement arrière, fonctionne à distance de la grille de retenue (2), le bras de raclage (11) étant accroché sur l'extrémité distale d'un bras de commande (8) logé en étant pivotant sur son extrémité proximale, pour faire pivoter le bras de commande (8), une deuxième système de réglage s'engageant au moins temporairement sur le bras de commande (8) et les systèmes de réglage étant accouplés l'un à l'autre de telle sorte que les déplacements du bras de commande (8) et du bras de raclage (11) soient synchronisés, **caractérisé en ce que** dans le déplacement vers l'avant du bras de raclage, le deuxième système de réglage soit hors engagement avec le bras de commande (8), le deuxième système de réglage comportant un essieu à manivelle (13), qui par l'intermédiaire d'un élément de traction (18) logé de manière excentrique par rapport à l'essieu à manivelle (13) est relié avec le bras de raclage (11) et soit une flèche (14) déborde de l'essieu à manivelle (13) qui par son extrémité distale peut être appuyée contre le bras de commande (8) ou sur l'essieu à manivelle (13) est montée une came (31) dont le bord forme une came de commande (32) et le bras de commande (8) comporte un élément de contact (33) qui peut être appuyé sur la came de commande (32).

2. Dégrilleur selon la revendication 1, **caractérisé en ce que** les deux systèmes de réglage disposent d'un entraînement motorisé (29).

3. Dégrilleur selon la revendication 1 ou 2, **caractérisé en ce que** l'axe de pivotement (5) du bras de commande se trouve au-dessus de l'extrémité supérieure de la grille de retenue (2) et s'étend en direction horizontale par-dessus la grille de retenue (2), et **en ce que** l'essieu à manivelle (13) se trouve en-dessous du bras de commande (8) et vu dans la direction de déplacement vers l'avant, se trouve derrière le bras de raclage (11).

4. Dégrilleur selon l'une quelconque des revendications précédentes, **caractérisé en ce que** l'axe de pivotement (5) du bras de commande (8) se trouve dans un boîtier (3) qui se compose de deux joues (4) s'étendant à la parallèle vers les bras et qui par l'intermédiaire d'appuis (22) réglables en hauteur est posé par-dessus l'extrémité supérieure de la grille de retenue (2).

5. Dégrilleur selon la revendication 4, **caractérisé en ce que** dans le boîtier (3), une coulisse (19) pouvant être appuyée sur l'élément racleur (9) est maintenue de manière pivotante.

6. Dégrilleur selon la revendication 4 ou 5, **caractérisé en ce qu'**une unité moteur / transmission (29) destinée à entraîner l'essieu à manivelle (13) est placée latéralement sur le boîtier (3).

7. Dégrilleur selon l'une quelconque des revendications précédentes, **caractérisé en ce que** sur l'extrémité supérieure de la grille de retenue (1) se raccorde sans interruption une rigole réceptrice (21) comportant un fond inférieur fermé, dans laquelle se trouve une vis sans fin de transport, le passage sans interruption formant d'une part une arête déverseuse pour les refus de dégrillage et d'autre part une arête de trop-plein pour le jus de pressage se formant dans la rigole réceptrice (21).
